# EUROPEAN PATENT SPECIFICATION

(11) **EP 2 689 192 B1**
(45) Date of publication and mention of the grant of the patent: **01.12.2021**
(21) Application number: 12716083.6
(22) Date of filing: 23.03.2012
(51) Int. Cl.: F24D 3/12, E04C 1/39, F28D 20/00, F24S 20/66, E04C 2/52, F28D 21/00

(54) **A HEAT ENERGY SYSTEM FOR HEATING OR MAINTAINING THERMAL BALANCE IN THE INTERIORS OF BUILDINGS OR BUILDING PARTS**
WÄRMEENERGIESYSTEM ZUM HEIZEN ODER AUFRECHTERHALTUNG DES WÄRMEHAUSHALTES IM INNEREN VON GEBÄUDEN ODER GEBÄUDETEILEN
SYSTÈME D'ÉNERGIE CALORIFIQUE POUVANT SERVIR À CHAUFFER OU À MAINTENIR UN ÉQUILIBRE THERMIQUE À L'INTÉRIEUR DE BÂTIMENTS OU DE PARTIES DE BÂTIMENTS

(30) Priority: 23.03.2011 HU P1100156
(43) Date of publication of application: 29.01.2014
(73) Proprietor: Gutai, Mátyás, 6000 Kecskemét (HU)
(72) Inventor: Gutai, Mátyás, 6000 Kecskemét (HU)
(74) Representative: Sari, Tamas Gusztav
(86) International application number: PCT/IB2012/051394
(87) International publication number: WO 2012/127451

(56) References cited:
- WO-A1-2004/046619
- WO-A2-2010/083834
- DE-A1- 19 844 617
- US-A- 3 246 689
- US-A- 4 068 652
- US-B1- 6 201 313
- "DIN EN 442-2 Radiatoren und Konvektoren - Teil 2: Pruefverfahren und Leistungsangabe", DEUTSCHE NORMEN. DIN NORM,, 1 December 2003 (2003-12-01), page 70pp, XP009171315,
- None

## Description

The invention relates to a building according to the introducing part of claim 1 for heating or maintaining thermal balance of an interior of at least a part of the building.

Since researches turned to renewable energy sources, solar energy has played a more and more important role in the heating of buildings. Several different solutions for this have been introduced, such as photovoltaic panels to provide electric power, or solar panels to cover the heat energy demand of buildings for heating or hot water supply (at least to a certain extent).

As it is well known, these systems developed to utilize solar heat energy basically consist of three main parts: a device to absorb heat energy, which inhabits a fluid medium and finally a technology to utilize the collected heat. In the beginning this task was usually solved by elements attached to the buildings like solar panels on rooftops or black painted water containers (popular especially in warmer climates). Nowadays however, these technologies intend to utilize the whole perimeter surface of a building. Depending on the building method or the size and the scale of the house, various systems have been developed.

The description of such a relatively simply system can be read in US 4,285,332. This technology can be used for small buildings and detached houses with a pitched roof. Distribution pipes are made at the ridge and eaves of the roof, between them there are parallel pipelines arranged running along the roof. Thin vertical containers are built in the perimeter walls insulated on both sides and placed directly next to each other at the interior side of the walls. The steel containers are connected to the pipes of eaves at the top and to another pipeline at the bottom which runs through the building and is attached to a pump. This lower pipeline is also connected to the distribution pipe of the ridge. The pump circulates water in the system. The steel containers have inbuilt heat-exchange pipes with air-intake holes at the bottom and air-exhaust holes at the top. In case of a multi-level building, the heat-exchange pipes have an extension conduct, which leads to the next floor.

It is important to note that the solution above and all following are only described to compare them with the invention disclosed in this document. Because of that, the examples are shown only with the necessary elements and properties for comparison, all other information (technical details, insulation solutions, selected materials, etc.) are presented to the necessary extent.

A relatively similar solution can be read in US 4,164,933 for panel buildings. The heat-exchange pipeline is made of concrete panels, which can be used as a roof, a wall, a fence or even as a road pavement. Neighboring panels are connected with each other and with the complete energy system, which runs a fluid in the panels.

EP 0 582 730 is also for small buildings like detached houses and workshops. In this case there are large and thin containers built in perimeter walls and the roof of the house with holes for the fluid medium to enter and exit from each container unit. There are three different types of containers for different tasks: a rain storage container, a heat storage container and a heat-balance container. Heat storage containers have inbuilt heat-exchange pipelines, which are connected to the heat energy system of the building and to the floor heating as well. Heat-balance containers are insulated from the outside and corrugated from the inside. An additional sheet can be placed in front of the corrugation and air in the void between the sheet and the container can be moved with a ventilator. The heat-balance container can contain heat-storage materials, and in case it is used on the roof, the outside surface is corrugated with a glass sheet cover on the top.

US 2009/0044465 introduces a panel technology which can be used also as a wall or a roof. The panel has a "heat-breaking" layer with heat-exchange pipes and an insulation layer on both sides. An antifreeze fluid runs in the pipes, which can be joined from one panel to the other to make a complete system in the whole building.

DE 44 23 137 can be used for any scale of buildings, in which case there are pipes in the perimeter walls placed outside in the insulation layer. The pipes are connected to distribution pipes in the wall, which join the heating system. This technology can be used to heat slabs and floors.

EP 0 455 184 is also applicable for any kind of a building. In a general case there is a perimeter transparent thermal insulation layer which inhabits an air cavity in which heat-transfer and heat storage elements are placed. A fluid runs in both units. Both are connected to the heat energy system of the building, which operates the heating unit inside the wall. The system can be extended with floor heating pipes as well.

DE 31 41 931 is ideal for larger multi-level buildings. A perimeter facade is made by a curtain wall system. The load-bearing element of the wall is an aluminum box which looks towards the exterior with its open end with an insulated layer at the bottom. A flat radiator heater is placed on the insulation, in front of it there are an air-layer, a flat plate with spacers and finally a glass plate. The air layer has inbuilt vertical channels. Water circulates in the flat radiator and air in the vertical channels. Slabs of the building have inbuilt pipes which are connected to the circulation system.

Further, document WO2004046619 reveals all the features of the preamble of claim 1.

As it can be seen from the descriptions above, the introduced solutions (and other technologies similar to them) are made to gather solar heat energy by a collector of any kind filled with a fluid medium and after that to forward this energy by heat transfer to another medium, usually water or air. This second medium takes part directly in the heating of indoors (with direct air flow for instance), or it is part of the buildings' heat energy system, and it is connected to heating applications (radiators, floor heating, etc.) or mechanical installations for hot water supply.

These solutions can be used well as an extension of the heat energy system to store heat energy surplus for later use to heat indoors or provide hot water. However, because the active energy system is basically separated from the solar energy collector technology, these solutions are applicable for a one-way energy transfer only.

Experience however shows that buildings are not in balance with respect to thermal energy. The heat gain of facade surfaces differ due to the changing solar exposure_caused by orientation. Because of that in conventional buildings temperature differences appear, which require considerable energy investment to be balanced.

Additionally there are internal heat sources which result in heat surplus in the building where they appear. Such sources could be concentrated mechanical applications in a building, or also audience of a lecture hall for example. These heat sources could be also included in the energy system of the building. Today there are already tendencies for this, but mainly only air-conditional systems are installed to eliminate the heat energy surplus.

Accordingly, the introduced systems are only applicable to collect external heat gain which can be used in a later period. They are not capable however to turn this process backwards, namely to conduct the heat surplus away, so they cannot support the cooling of a building. They also do not take part in the distribution of the heat gain, because they leave that to conventional mechanical installations (like radiators for example). Because of that they also cannot avoid the occurance of temperature differences in the building.

The aim of the invention is to create an energy system which on the one hand is able to utilize all heat energy which appears in the building, and also can balance the undesired heat differences indoors.

The invention is based upon the following realization.

In terms of thermal energy, there are "heat gaining" and "heat losing" surfaces in any building. The first ones are usually perimeter structures (wall, roof), occasionally surfaces surrounding internal heat sources. These areas take the local heat gains. Heat losing surfaces are the ones which have no actual heat gain, therefore they are colder. This can be a ceiling, an internal wall or a floor, or even a perimeter wall, if it is currently not directly exposed to sunlight for instance (like a cold wall looking north). The ratio between heat gaining and losing surfaces always depends on the actual heat gain and the geometry of the building. In case of known examples, thermally speaking there is no direct connection between these two kinds of surfaces. Balance however is easier maintained if we create a direct connection between them, which can transfer considerable amount of heat energy rapidly.

Because technically heat transfer can ideally be assured by water, a large amount of heat energy can be passed on to heat losing surfaces from heat gaining ones if the transfer can occur through a relatively large connection surface. The task can be solved in an even more simple way if also surfaces surrounding indoors are employed which are between the heat gaining and heat losing areas.

Technically this can be solved if the already known thin containers are not only made along the heat gaining surfaces, or generally along or instead of the perimeter walls, but also the same thin containers are built along (or next/instead of) the surrounding surfaces of a given indoor space: one placed next to/instead of the heat losing surface and two parallel to the lower and upper slab structures. Finally the neighbor containers will be connected in a large area.

This way the containers define a closed loop in which the medium (like water) can flow freely. There is no mechanical installation required to assure this, because the fluid infill intends to reach a thermal equilibrium, and therefore the mass heated up flows towards the colder areas.

The mass of this structure is given by a fluid (like water), the weight of which is not inbuilt separately, but joined and connected continuously: from the perimeter wall the container fluid can flow towards the floor or the ceiling as well. This possibility is important because heat energy is transferred from the warm areas of a building to the colder ones in the fluid. Actual gains therefore spread in the whole building, so the useful thermal mass increases considerably. This is practical not only in winter but also during summer, because this way the overheating of the interior can be avoided.

The system can utilize heat energy in several ways.

Basically the absorbed heat flows to the colder areas of the building, namely it will be used immediately.

The collected heat however can be also more, then it is necessary to maintain ideal temperature. The part of heat energy, which cannot be used right away, namely the heat surplus can be stored in various ways.

In the simplest case the heat itself is stored in the thermal mass of the closed circuits fluid volume. Because floors and also ceilings are connected to the walls, a large water volume takes part in the heat storage. The capacity of thermal storage is still limited of course, but it is still considerably higher, then in case of conventional structures.

This solution works effectively if it is united with some cooling solution like when the system during the night is ventilated by fans through air pipes placed in the containers, so the heat surplus is transmitted back to the environment outside. The stored heat this time flows backwards (towards the exterior), the heat gaining surfaces during daytime become heat losers and finally all heat store capacity will be available for the next day.

Another possibility, if the heat surplus is stored by an auxiliary system. This could be a conventional container in which the heat is diverted to, or it can be an underground storage also. The heat this case can be utilized for hot water supply or for heating support similarly to solar panel system.

The present invention provides a solution according to the subject matter of claim 1. Several preferred embodiments are disclosed in the dependent claims.

In the following, embodiments are described in more detail by means of drawings where:
Figure 1 shows a building with a simple version of a heat energy system on a schematic vertical section;
Figure 2 shows the horizontal section I-I of the building as shown in Figure 1;
Figure 3 shows enlarged the part of Figure 1 ;
Figure 4 shows the detailed section II-II of the building according to Figure 3;
Figure 5 shows the detailed section III-III of the building according to Figure 3;
Figures 6a-6b show special version for the joint elbow elements on a perspective drawing;
Figures 7a-7b show one container applicable for the heat energy system on a perspective drawing and on cross section IV-IV according to Figure 7a;
Figures 8a-8c show another container applicable for the heat energy system on a perspective drawing and also on cross section V-V and longitudinal section VI-VI according to Figure 8a;
Figures 9a-9b show a third container applicable for the heat energy system on a perspective drawing and on cross section VII-VII according to Figure 9a;
Figures 10a-10e show some buildings with different versions of the heat energy system on one schematic vertical section for each;
Figures 11a-11c show different solutions for the problem of openings;
Figures 12a-12b show a special version for façade to realize the heat energy system on vertical section and on horizontal section VIII-VIII according to Figure 12a;
Figures 13a-13d show another special version for façade on a vertical section and on horizontal section IX-IX according to Figure 13a with a sketch of the operation;
Figure 14 shows the way to realize the heat energy system replacing the building frame on a schematic perspective drawing;
Figure 15 shows the installation of the heat energy system which aids radiant cooling on a vertical section of the building;
Figure 16 shows schematic wiring figure for the heat storage version of the heat energy system;
Figure 17 shows the connection between the conventional heat energy system of the building and the new heat energy system on a schematic drawing;
Figures 18a-18d show variations for heat exchangers for the heat energy system on perspective drawings and the sections X-X, XI-XI and XII-XII according to Figure 18a;
Figure 19 shows additional versions for heat exchangers for the heat energy system on perspective drawing;
Figure 20 shows,according to an embodiment of the invention, a version for heat exchanger for the heat energy system on vertical longitudinal section;

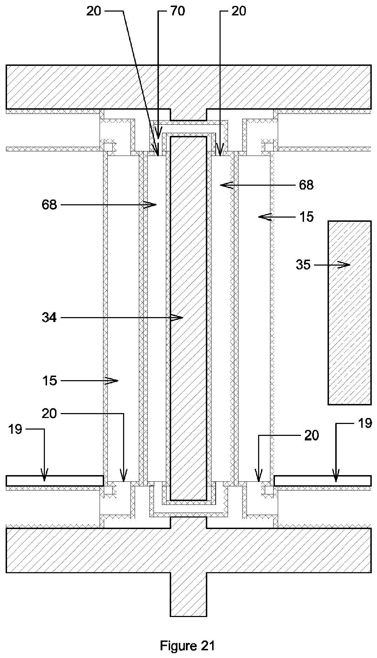

Figure 21 shows, according to an embodiment of the invention, an arrangement to assure heat transfer connection between rooms equipped with the heat energy system on a vertical section; and

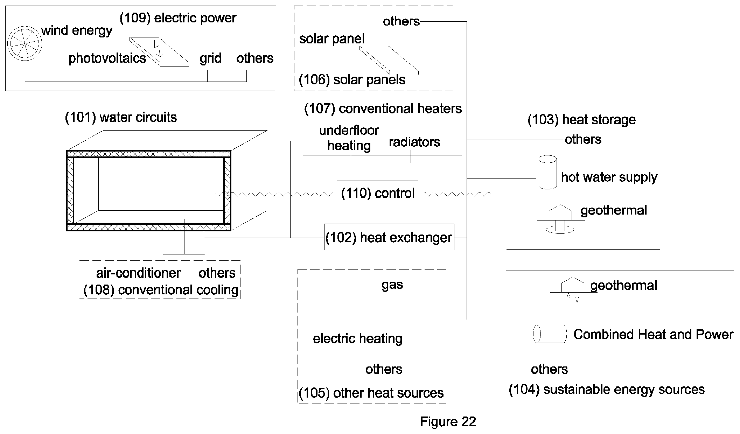

Figure 22 shows connection between the heat energy system and known energy systems of a building.

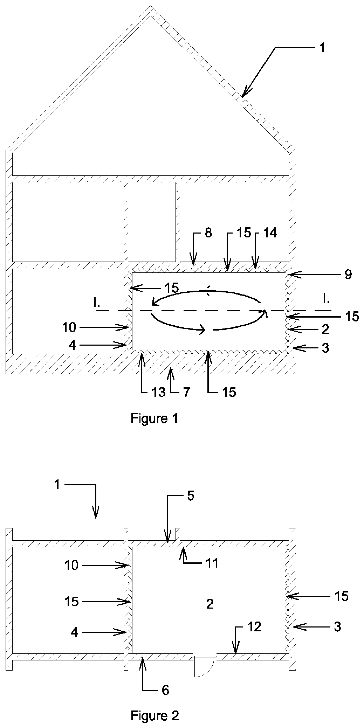

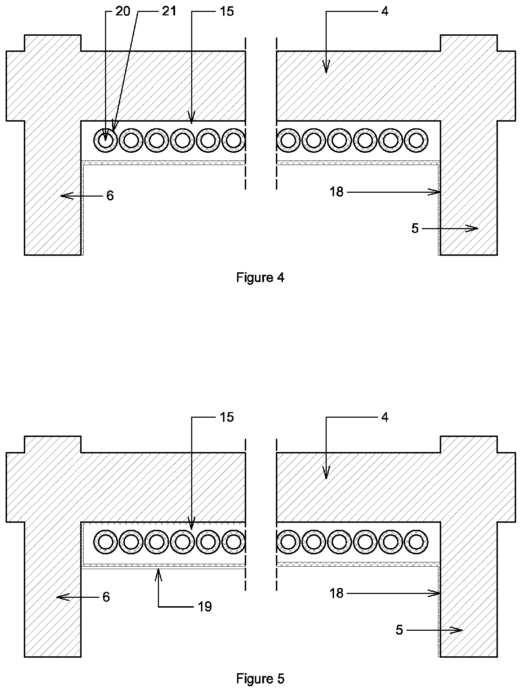

The embodiments shown in Figures 1 to 19 and described in the corresponding part of the description do not fall under the protection of the claims.

For an easier description, it is reasonable to introduce the utilization of the invention first as a thermal energy system made for a small building where there are also closed rooms without windows. According to this, in Figures 1-5 a relatively small building is shown with two floors and a pitched roof. There is only one closed room 2 of the building 1 which is equipped with the thermal energy system.

The surrounding surfaces 9-14 of the room 2 are given from one side by the perimeter wall 3 of the building 1, from the other sides by additional interior walls 4-6, also by the floor 7 from the bottom and by the slab 8 from the top. Each of them is made of conventional materials of building practice (to understand the invention, the structure of the building, the different structural elements and openings such as windows and doors, appliances or the utilized materials have no importance, they are not indicated on the Figures either, and their detailed introduction is not necessary, either).

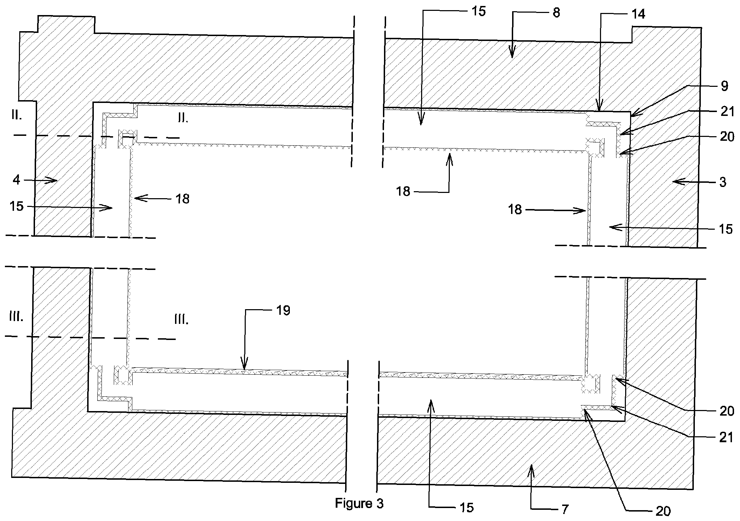

As it can be seen in a more detailed fashion in Figures 3-5, next to the surrounding surface 9 of the perimeter wall 3, next to the opposite surrounding surface 10 of the interior wall 4, above the floor's 7 surrounding surface 13 and below the slab's 8 surrounding surface 14 there are thin containers 15 attached in the room 2. The containers 15 have different size and their surface are about the same as the area of the surrounding surfaces 9, 10, 13 and 14 -apart from the space required for their assembly- attached to them respectively.

In this case the containers 15 are made of plastic, but steel, aluminum or other materials can also be used. Figures 3-5 show a simple realization, when containers are made of plastic plates 16 parallel to 9, 10, 13, 14 surfaces and side plates 20 welded together.

The containers 15 at vertical surrounding surfaces 9 and 10, and the bottom surface 16 of the upper container 15 below the surrounding surface 14 can have an additional layer for finish 18. This can be wallpaper or any other suitable material, ideally heat conducting. On the top side 16 of the container 15, which lies on the bottom surrounding surface 13, there is a load-bearing layer and a walkable floor finish 19.

There are joint elements 20 along the whole side 17 where neighboring panels 15 meet each other. In the current example, these elements are plastic tubes melded in the side 17 of the panels. The neighboring panels 15 joining elements 20 are at the same location for each panel, and they are connected by tube connecting elbow fitting 21 but they could be connected by any other technology (like welding, gluing, by heat expanding elements, etc.). The diameter of the joining elements 20 and elbow fitting 21 are as large as possible to assure an effective flow.

The containers 15 are prefabricated and made together with the joint elements 20 in a factory. After they are put to their places in the room 2 of the building 1, the joint elements 20 placed in pairs for neighboring containers 15 can be connected. With this a system is made, in which the containers 15 create a closed circuit and an interconnected volume, in which the fluid medium can flow freely.

After all joining elements 20 are connected, the containers' internal volume can be filled with fluid. Because in case of heating in buildings the heat transfer medium is normally water, in case of the introduced system here the fluid infill of the containers 15 is water also, and in later introduction the fluid in general may be referred as water, with the amendment, that it could be naturally other fluid applicable for this purpose.

In the heat energy system the same fluid medium in the containers absorbs and stores the heat, also working as a heater/cooler unit (one part of the fluid surface may be small but joined with the rest, it can provide a significant heat storage capacity).

The heat gain of the surrounding surfaces 9-14 in the room 2 can be different because of their location, which causes temperature differences in the building 1. The flow of the fluid medium in the containers 15 is generated by the temperature differences between heat gaining and losing surfaces. Thermal balance is assured only by the fluid itself, which flows from heat gaining surfaces to the colder heat losing ones.

During daytime, naturally the building's 1 perimeter façade is the heat gaining surface in the room 2 and heat loser is any surface 10-14 which is connected to the heat gainer one, but it is colder because of lack of actual heat gain. Solar heat gain warms the fluid in the container 15 reaching it through the wall structure 3. The temperature balance between heat gaining and losing surfaces causes the warmed-up fluid to flow from the container next to the perimeter wall 15 to the other containers 18, 16 and finally 17 where it can pass the heat surplus to colder areas reaching thermal balance.

The flow can naturally occur in both directions, therefore if any surrounding surface 10-14 of the room 2 becomes an actual heat gaining area because of any heat load, or the perimeter façade cools down and changes to heat losing area, the direction of the fluid flow can be opposite as well.

According to this, the system works during nighttime in the opposite way. The thermal mass of the fluid utilizes the solar gain to protect the interior against cooling. This is similar to the effect of the thermal mass in conventional buildings, but in this case the actual gain is spread in the whole system, so the amount of utilized heat energy increases significantly. This is practical not only in winter but also during summer, because this way the heating up of the interior can be avoided.

Because of the introduced operation of the heat energy system, stable temperature can be maintained in the room 2.

For a full introduction, the introduced heat energy simple system has to be extended with some technical information.

The containers 15 are attached to the perimeter 3 and also interior wall 4 and to the slab 8 by railings and bolts. This can ideally be made by screw joints with holes prepared on the side 17 or simply through sheaths, which allow the screws to reach the wall directly through the container.

Figures show no insulation between the surrounding surfaces 9, 10, 13, 14 and the containers 15. The need for insulation always depends on the current conditions. Generally some insulation may be necessary if the goal is to keep all heat gains in the room 2 and heat should not be passed beyond the containers 15 to the other parts of the house. This can be especially practical when other building parts are allowed to be colder for any reason. Yet there are some cases, when lack of insulation is ideal, for example in case of the perimeter wall 3 when the goal is to allow solar gain to reach the fluid volume.

As it was mentioned before, the containers 15 after finished assembly have to be filled with fluid to keep the presence of air to minimum. For fluid infill for at least at one point in the bottom as shown in Figures 1 and 2, at the edges of walls 4 and 6 and floor 7 and at one location at the top diagonally at the edges of walls 3 and 5 and slab 8 the joint elements 20 are joined with a special elbow fitting at the bottom 21A and at the top 21F.

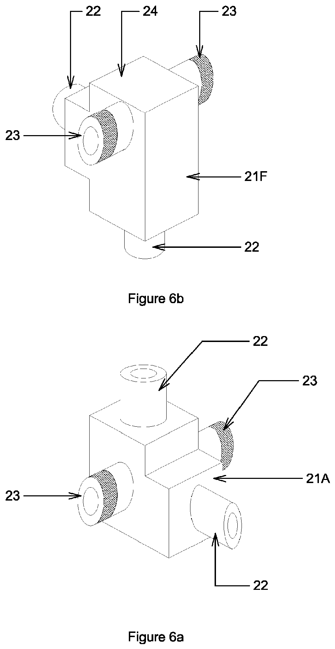

As it can be seen in Figure 6a, on both sides of the joint elbow fitting 21A, perpendicular to the plane defined by joint elements 20 and joint valves 22 there is one check valve 23 for each side. The principle of the check valve 23 is similar to the automatic self-closing valves used for hose joints, namely the check valves in the joint fittings open automatically when the joined elements -like a hose used for fluid infill- are put in.

The upper joint fitting 21F is generally made the same way, but opposite to one joint valve 22 its volume is increased and on both side of the resulted air lock 24 are the check valves 23 placed.

Fluid filling occurs through one of the check valves 23 of joint elbow fitting 21A and when the containers 15 are filled up completely the rest of the unnecessary water leaves through the check valve 23 of the upper joint elbow 21F. Then the check valves 23 can be closed - by removing the hoses-, so the air presence in the system is minimal. The air lock 24 leaves space for expansion of the water in case of warming up.

The side 16 of the upper container 15 can also be made to aid the flow of leaving air. In the whole closed water circuit the highest point is the air lock and the upper side 16 of this container 15 can be tilted slightly to this direction -namely the two sides 16 of the container 15 are not parallel this case-.

The check valves 23 of joint elbow fittings 21A and 21F allow also the change of fluid for cleaning and maintenance (pumping from upside and taking from the bottom or vice versa).

The joint elements 20 of the containers 15 are closed with a membrane in the fabrication process to avoid any pollution to enter the containers during transportation and construction. Air is also pumped out of the panels before placing the membrane. During the assembly, the connecting elbow between 2 joint elements opens the membrane automatically.

Depending on their purpose the now introduced containers can be made in different variations.

The simplest containers 15 consist of sides 16 and edges 17 made by sheets only. The containers 15 are welded (in case of plastic or steel) or assembled by gluing with a frame (in case of glass). These can be used if there is a supporting surface next to them, to which they can be attached to.

The container 15 does not necessary have to be fixed directly to the supporting surface, it can also be a suspended ceiling. The containers 15 at the ceiling are made horizontal and normally with and opaque surface, similar to conventional ceilings, with grid work of metal channels and hanging spacers.

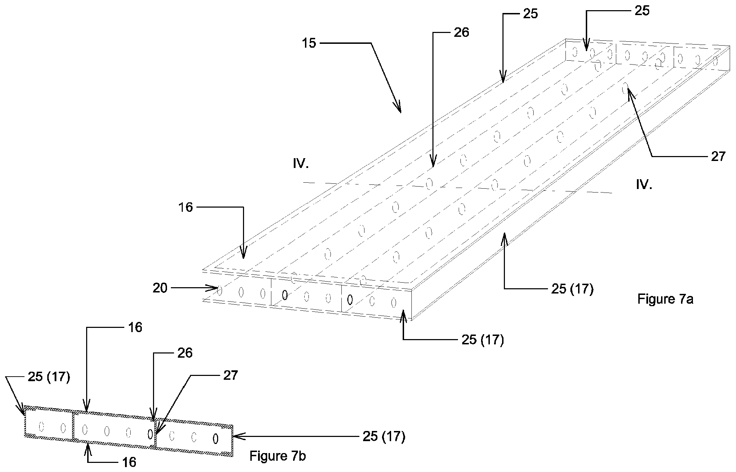

These simple made containers 15 have limited structural strength and practically they can support their own weight only (naturally in their own weight includes the water also). This is why they can be used only as fixed to a supporting surface as mentioned above. At the same time also containers 15 can be necessary, which can be built in without supported sides 16, for this the self-supporting containers 15 can be made, as shown in Figure 7a and 7b.

These self-supporting containers 15 are surrounded by a structural frame 25. The frame as shown in Figures is made by two horizontal and vertical U beams. The sides 16 are fixed to the U beams' edges, which makes the third side of the U beams the edges 17 of the container 15. In case of thicker containers the frame can also be made by L beams naturally, which have to be covered by an edge 17, i.e. this case the edges 17 and the frame 25 are two different structural elements.

In case of containers 15 with larger surface spacers 26 can be placed between the sides 16 inside the container 15 in a way that they do not disturb the flow of water - practically placed parallel to the flows current with perforations 27. These containers 15 can be used as independent wall elements (panels).

The container 15 used for roofs have to be mentioned as well. These are made with similar structure with the ones introduced above, these are also self-supporting containers 15, but in case of structural load of precipitation also has to be taken into account. The load-bearing frame this case is normally made as a conventional structure, like steel or wooden frame.

The containers 15 - either simple or self-supporting- are normally made by steel- wood or plastic sheets, i.e. they are opaque. In addition to that the containers 15 can also be made in a way that at least one of its sides is made by transparent or translucent material. The transparent or translucent material is generally plastic but also glass can be used. The latter is primarily applicable for containers 15 used for roofs.

As it could be seen on the built example introduced earlier, one container 15 is laid on the floor 7. This one has to have load-bearing capacity. Because of different reasons, the container 15 may have to have structural strength in other cases as well. Basically there are two options to make a load-bearing container.

One solution is that the thickness of the containers' 15 sides 16 and edges 17 is increased. This possibility is simpler structurally but its disadvantage is, that because of thicker sheets less heat can reach the water. Also the efficiency during heating and cooling drops as well.

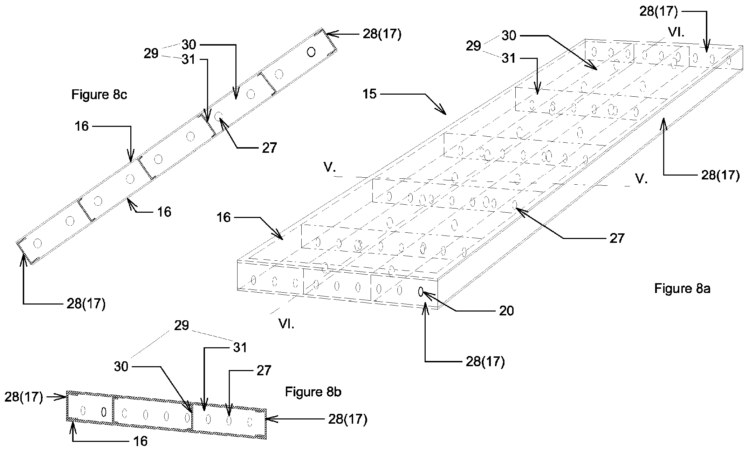

Another option is if the container 15 is surrounded by load-bearing frame 28 (as shown in Figures 8a-8c) and between the sides 16 a there is a bracing 29 inbuilt (similar to the version mentioned earlier, like a frame of longitudinal 30 and cross 31 spacers made by steel). Both load-bearing frame 28 and bracing frame 29 are made similar to the self-supporting version introduced above, but they are made by stronger materials or design. So the load-bearing frame 28 can also be made by U beams, these can also give the edges 17 of the container 15. The spacers 30 and 31 are placed in a way so they do not disturb the water flow -like made with perforations 27 for example-. This solution results less material use and structural weight but its disadvantage is that the flow can be influenced by the spacers 30 and 31.

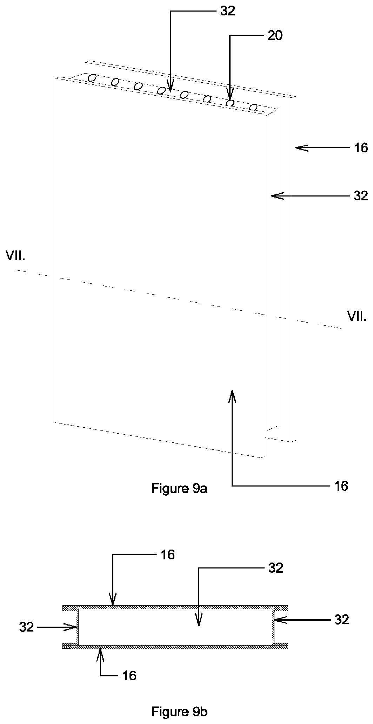

The containers 15 made this way can bear more weight in addition to their own. This solution allows also to have no need for bracing or load bearing elements for the building (like beams and columns) between the containers 15. The container 15 in Figures 9a-9b is made in this fashion and only differs from the others by a load-bearing frame 32 in which the U beams are turned inside of the container.

In case of this design generally opaque materials are used, because this way the thick steel sheets 16 can also participate in load-bearing, but also transparent design is possible, which can be made mainly by glass. This latter design is primarily for roofs, because the structural load for roofs is generally lower than in case of walls.

The structure of load-bearing containers 15 for floors is very similar to the general load-bearing containers 15 and its materials are generally opaque. Because the nature of structural load is obviously different for this case, and because the support has to be done for the whole surface this one can only be done by frame of inner spacers 30 and 31), with a freely chosen overlay 19 which consist of a load-bearing layer and a walkable finish. The spacers 30 and 31 transmit the structural load from the overlay 19 to the slab below the container 15. This case a load-bearing layer has to be made below the container 15 as an additional structural layer.

The load-bearing containers 15 used as floor can also be made with increased structural capacity, so theoretically it can also replace slabs, if it fulfills the structural demands.

To sum up, the load-bearing containers' 15 material is generally steel sheets, but also transparent/translucent design is possible, which normally can be made by glass. Containers used for floors and ceilings are exception, which generally made opaque. The design depends on the architectural concept in the end.

As the description above implies, the containers 15 can be used in different ways depending on their design.

The simplest way is the method introduced earlier, when the simple containers 15 are built to the walls of the room from inside. The water circuit becomes an inner core and each side of it is an interior structure. This case the water circuits function is only cooling/heating and energy distribution. Because it has a large active surface, it can already drop the necessary energy consumption already in this case.

Although in the example the building with several rooms is equipped with the heat energy system in one space only, in reality this is only typical for buildings with one space (like halls or open plan office with one main room). If the building has more spaces on one floor, then normally more water circuits are required. They could be ones without any façade surface or on the contrary, they could be connected to the exterior with one or two maybe even with three (including roof) perimeter surfaces.

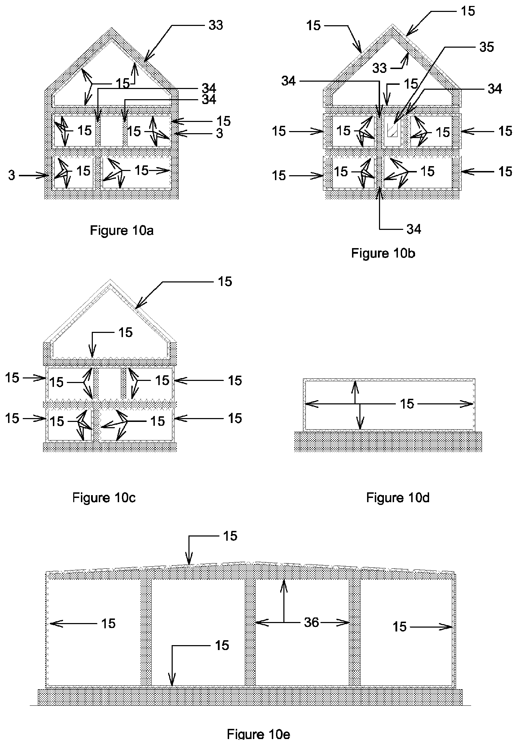

Naturally the variations for building containers 15 are unlimited. In Figures 10a-10e some schematic versions for container arrangement can be seen, which can be made by using the containers introduced earlier, with some special solutions for each respectively (to show the differences more clearly for the most of these Figures the same building is shown as in the first example).

In the version in Figure 10a the system is made on both floors and also in the roof. The containers 15 -similarly to the earlier example- are internal and placed everywhere along the planes of façade walls 3 and the roof 33. In the two spaces on the lower floor the containers 15 make one independent fluid circuit on both sides of the separating wall 34. On the second level there are three spaces included in one water circuit in a way that -looking parallel to the main axis of the horizontal containers 15- two vertical containers are placed next to the most external walls of these rooms, this case the two facing perimeter walls 3 and the lower and upper horizontal containers 15 run through all rooms included in the system and the separating walls 34 between the spaces are between the horizontal containers 15.

The containers 15 can also be placed on the external surface of the façade expressly to use solar energy. Figure 10b shows an arrangement for that. The containers are not only placed outside the façade walls but also outside the roof 33. Figure 10b also shows that there could be rooms, namely this case on the lower floor, which all have façade wall and the two façade surface have opposite orientation, or if there are more rooms and each of them has independent water circuit, there could be a space like this case the middle room on second level which case it is surrounded by another spaces on both sides.

The container 15 can be built instead of a conventional façade wall 3 or roof 33 as it can be seen in Figure 10c.

Finally, using the containers 1 even independent buildings can be built. Floor and two perimeter walls and the roof of the pavilion in Figure 10d are made by containers 15. Similarly all perimeter surface of the hall in Figure 10e is made by containers 15 only, but because its size the containers 15 are supported by a load-bearing structure 36.

It has to be noted here, that until now there have been examples mentioned only where the space was surrounded by four containers 15 in total, in reality in case of larger surfaces it would be difficult to use one large container only, therefore the system can be made by more independent smaller containers also.

Although normally it is not necessary, in these cases it could happen, that the water circuits next to each other have to be connected. There are two possibilities to do this. One option is, that the joint elements 20 of the containers 15 to be connected have a joint elbow fitting 21A or 21F, which has check valves 23 on both sides. Through these using a short pipe the two neighboring check valves 21A or 21F and by that the two water circuits can be connected. Another possibility is when the neighboring edges 17 of the containers have themselves joint check valves inbuilt which also can be joined by a hose.

Also it has to be mentioned here, that in case of some building design it may be unavoidable to place the container on or next to a wall which has openings. In such cases as a technical compromise a thinner container compared to the other containers used in the room can be utilized.

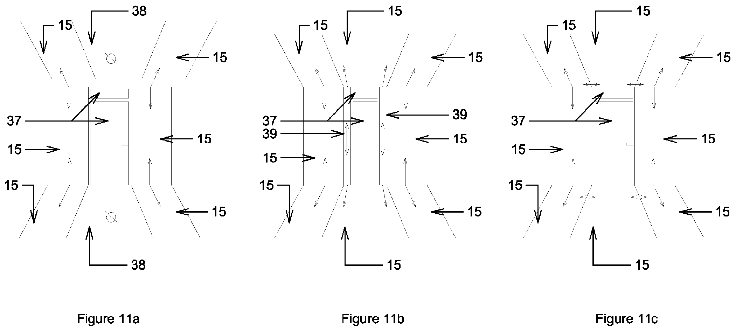

In addition to that another important point has to be taken into account, because water obviously cannot let through these elements, therefore these parts cannot be included in the water circuit. There are several possibilities to assure water flow.
- The simplest case shown in Figure 11a when the opening 37 is as high as the ceiling height or with additional structure it reached from floor to ceiling (like parapet wall and window). This case in the area of the opening 37 the water circuit can be omitted, namely there is no container in that zone. In place of the missing containers there are expletive elements 38 - naturally also on the wall facing the opening 37, which cannot be shown on the drawing-. These can be completely solid but also containers identical to the other containers but they are closed. In sense of thermal energy the water in them is still useful.
- If the opening is as high as the ceiling height but its width is less than the general width of the containers 15 then -as shown in Figure 11b- then the other containers 15 can be still placed in the zone of the opening 37 and the water can pass along the sides of the opening 37 trough pipes 39 and reach the next horizontal container 15. This option can be made also, when the opening is wider but between the openings 37 dividing frames can be placed which inhabit the pipes 39.
- Finally - as shown in Figure 11c- the other containers can be still placed in the zone of the opening 37 and the containers 15 can be connected to the neighboring water circuits through the joint elbow fittings 21A and 21F or through joint fittings built in the sides 17 of the containers 15.

If the opening 37 is not as high as the ceiling height (like parapet wall and window for example) then below or above the openings 37 containers 15 with reasonable size can be built and in the zone of the opening the water circuit can be made along the sides of the opening the same way like in the earlier cases, but as an extreme solution the water circuit can also let in the neighboring circuit also.

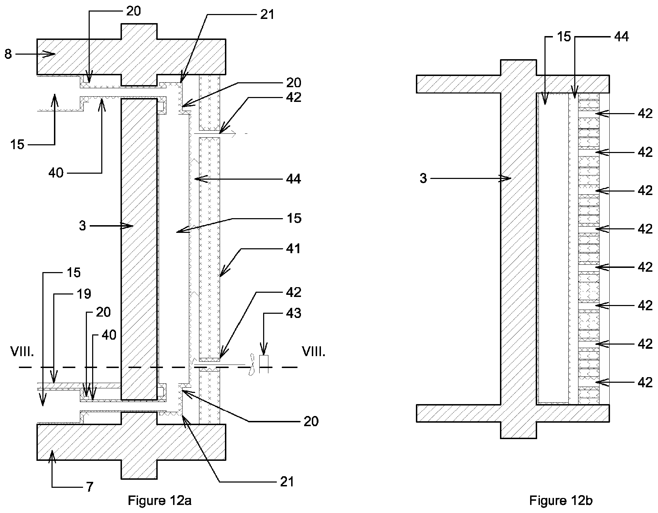

As Figure 10b shows and also can be seen in Figures 12a-12b the containers 15 can also be placed as a front wall to profit from solar energy. This case between the joint elbow fitting 21 of the joint elements 20 of the container 15 placed as a front wall and joint elements of the lower and upper horizontal containers 15 there are pipes 40 passing through holes in the perimeter wall 3. This joint method of course can be used everywhere when vertical and horizontal containers 15 placed on two sides of a wall have to be connected. The containers 15 can also be placed outside the roof 33 when also the method mentioned above is applicable.

The container 15 increases thermal insulation and lowers the heat load (the front wall practically acts as a solar panel).

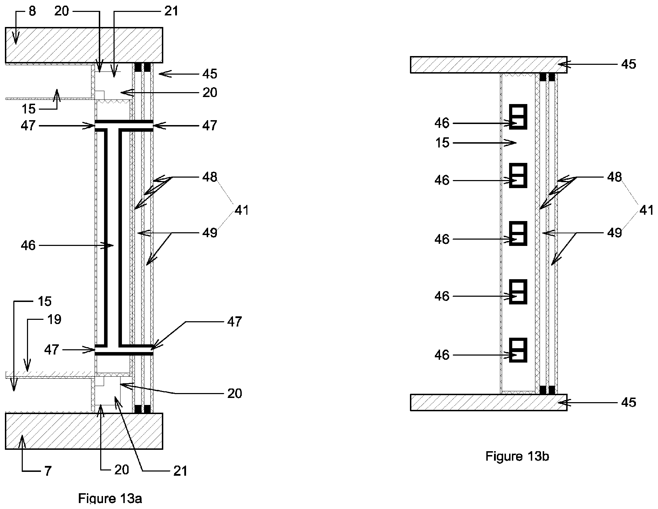

The container 15 can be built instead of a conventional wall as a perimeter self-supporting structure. This can be seen in Figure10c and more detailed in Figures 13a-13b. This case the load-bearing structure is a column grid 45 inside and/or along the perimeter of the building. The container 15 is built in the conventional load-bearing structure 45 as a structural infill or as a curtain wall on the facade. The self-supporting containers 15 serve this purpose.

The container 15 can be transparent (glass or plastic) or opaque (typically plastic or steel but it can be made by other materials also). Depending on the architectural concept internal side of the container 15 has a transparent or translucent protecting finish 18 but also other materials can be used.

Similarly, instead of conventional roof covering (tiles or slates, etc.) self-supporting containers 15 can be built on the roof 33. Naturally the load-bearing structure of the roof 33 is still necessary. As it was mentioned earlier, in case of these containers 15 the structural load of precipitation also has to be taken into account.

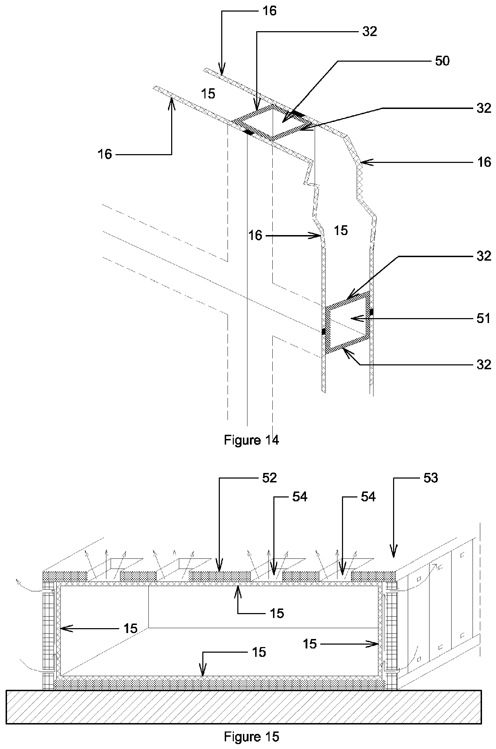

Load-bearing containers 15 as shown in Figures 9a and 9b -similarly to panel buildings- can give the structure of the building also. This case the façade wall 3 and the container 15 are built as one structure. This is also possible in case of an internal separating wall and the container 15 next to it. The geometry of the containers 15 load-bearing frame 32 results vertical columns 50 and beams 51 between the containers 15 as shown in Figure 14. The structural load is taken by the columns 50 and beams 51 between the containers 15 which are connected to make a water circuit as structural infill elements between the columns 50 and beams 51).

The materials used for container 15 can be transparent/translucent (glass or plastic) or opaque (typically plastic, steel or other material). For the containers design it is important, that external heat gain should be able to reach the water volume. Because of that the external side of the container 15 is typically made by a heat and light conducting material. If that is not possible because of any reason, the container 15 can also be made by opaque material. This case the container 15 is made with an absorber surface finish similarly to solar panels.

As it was mentioned before, depending on their function thermal insulation for the containers 15 may be necessary.

If the container 15 is built inside the building (simple internal, internal structural infill or internal load-bearing type) thermal insulation is normally not required unless a special task or demand does not make it reasonable to use. Because the load-bearing containers 15 used for floor 7 is laid on the slab as an interior structure thermal insulation is also not made this case.

If the container is built as a perimeter wall then depending on outside temperature conditions thermal insulation of the container 15 might be necessary which is placed on the external side.

The containers 15 operation is ideal if the heating effect of solar gain reaches the containers 15. Therefore if thermal insulation is used then ideally it is made as transparent/translucent so sunlight can get to the water. If the container 15 is made by opaque materials the thermal insulation ideally is still a transparent system.

Thermal insulation can be typically two- or more glass or plastic sheets with voids in between.

This can be done by prefabricated closed gas cells for example like thermal insulation 41 in Figures 12a and 12b, or it can be made by layers of glass or plastic insulation sheets 48 with air cavities 49 between them and air-tight proof sealing along their perimeter as it can be seen in Figures 13a and 13b.

The thermal insulation can also be placed during construction when the containers 15 are positioned, but the container 15 generally is applicable for panel building technology, therefore the thermal insulation 41 can be placed on the container 15 already during fabrication. Similarly to the thermal insulation 41 other layers can be placed on the container 15 like the walkable finish 19 on load-bearing containers 15 used for floors. On the internal surface of the container a light-transmitting transparent/translucent plastic finish 18 can be made or also another material can be used depending on the architectural concept.

Generally it is necessary to use thermal insulation on containers 15 for the roof 33, this can be made similarly to the containers 15 built as a wall typically with transparent design.

As it can be seen, the water circuit can utilize also the solar heat gain in case the containers 15 were built outside or instead the perimeter wall 3. The efficiency of the system compared to conventional solar panels is lower because some part of the solar energy is absorbed by the insulation 41 but the heat loss also decreases and the utilized surface area is larger considerably.

Another important factor is, that inside the building the perimeter wall 3 is not the only heat absorber surface, therefore what the wall cannot take is utilized by the other elements of the water circuit (typically the floor). Therefore although one element's efficiency is lower than solar panels, together they still are capable to absorb and use heat effectively.

Naturally the containers not only collect solar heat gain but they are also capable to radiate it back during the night.

The building example introduced earlier shows the simplest case, when the containers 15 are transparent and are fixed to opaque structures. Another case when the containers 15 are on the external side of the perimeter wall 3 therefore the system has external effects: it heats up because solar gain or cools down during the night. This case the systems design is identical to the earlier example, the difference is how it works: during daytime at the perimeter wall 3 the floor 7 and partially the walls 5 and 6 warms up and the heat is transmitted by the water to the colder areas. In the night when outside temperature is lower the direction of heat flow turns to opposite. The temperature of the external container's 15 surface drops and the stored heat from daytime flows here. The external container's 15 surface radiates the stored heat back to the environment.

The operation becomes more complex if the facing walls included in the system are both perimeter walls as it can be seen on second level of the building in Figure 10a. This case the direction of the heat flow can change several times during the day depending on which side is reached by sunlight or what are the temperature conditions indoors.

It can happen that the heat storage capacity of the closed circuit is not enough and more heat arose then it is necessary to maintain ideal temperature, namely heat surplus appears. This can occur because of internal heat sources (like for example concentrated mechanical systems, server room, or audience of a lecture hall as mentioned earlier) or because of external heat gain (solar heating effect). One solution for this is if the thermal storage capacity is designed according to the maximal heat load of a certain operation period (like for a day) and until the next period the water circuit can give the heat gain back.

There are several ways to increase the heat return during nighttime.

In Figures 12a and 12b the container 15 placed before perimeter wall 3 has thermal insulation 41. Between the container's 15 side 16 and thermal insulation 41 there is air cavity 44. In the thermal insulation 41 there are rows of ventilation holes 42 near to the container's 15 top and bottom. When outside air cools down, it flows from the lower ventilation holes 42 through the air cavity 44 and leaves through the upper ventilation holes 42). During the flow the air warms up and the water in the container 15 cools down. The process can be intensified by increasing the speed of flowing air in the cavity 44 by an airflow producing appliance 43 (like a ventilator) shown on the Figure schematically.

Night cooling can be increased also by ventilation. In Figures 13a and 13b the container 15 has ventilation pipes 46 inbuilt, in the middle of the container 15 and next to each other. The ventilation pipes 46 are made in pairs and in a way that they are in direct contact with each other on the largest surface area possible. The ventilation pipes 46 are connected to the outside and to the interior by a conduct 47 on each side at the top and at the bottom. At the external side the conduct 47 also penetrates the thermal insulation 41 naturally. On both sides of the container 15 each conduct 47 is connected to an airflow producing appliance 43 in a way that in case of both lower and upper conducts 47 the airflow producing applications are placed in pairs and work in the opposite direction.

Ventilation takes place as following.

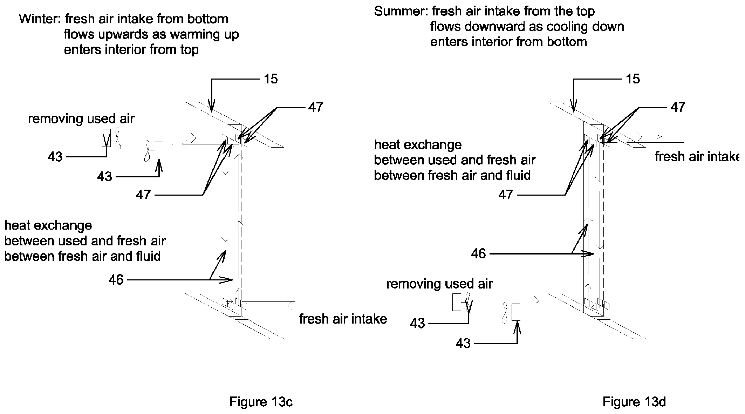

In winter -as it can be seen in Figure 13c- the airflow producing appliance 47 takes fresh air in from outdoors through the lower conducts 47 which enters the interiors through the upper conducts 47, meanwhile the other airflow producing appliance 43 removes used air through the upper conducts 47 which leaves to outside through the lower conducts 47. In the air ventilation pipes 46 placed in pairs heat exchange takes place between the fresh and used air with oppositional air flow ― through the shared surface of ventilation pipes 46 in contact- and also between the fresh air and the water in the container 15, so the fresh air intake warms up before it reaches the interior.

During summer - as it can be seen in Figure 13d - the flows direction is opposite. The airflow producing appliances 47 take fresh air from the upper conducts 47 to the interior through the lower conducts 47, while also push used air from lower conducts 47 through upper conducts 47 to outside. Because of the heat exchange between fresh air intake and leaving air and also between fresh air and the water in the container 15 the air cools down before it enters the interior.

The radiant night cooling of the system can also be intensified to a lesser extent by a simpler solution also. In Figure 15 a building 52 can be seen with flat roof and with containers 15 inbuilt. On the roof 53 of the building 52 there are skylights which below the containers 15 are simply made by transparent/translucent materials. During night this skylight openings 54 also contribute to the radiant cooling.

The disadvantage of this methods introduced is, that the heat gain is not utilized, energy savings are limited to cooling only.

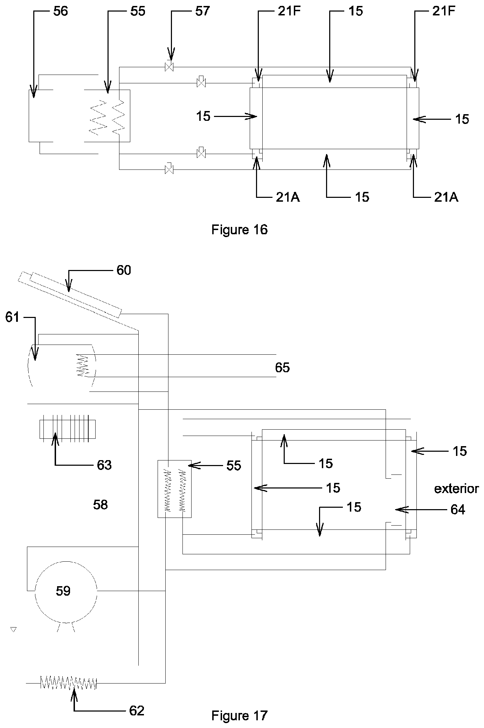

The other option is when the heat surplus of the system is stored by another appliance. This can be done the easiest way if a heat exchange unit 55 is connected to the water circuit of the containers 15 - as it can be seen in Figure 16. To achieve that in one of each two containers' 15 connection there is a joint elbow fitting 21A and 21F with check valve 23 through which the water circuit can be connected to one circuit of the heat exchanger 55. The other circuit of heat exchanger 55 has a heat storage appliance 56. Thereby the water circuit of the containers 15 can remain independent because between the two circuits there is only heat transfer and no fluid exchange.

The heat exchanger 55 collects warm water from the upper area of the containers' 15 placed next to the walls and warm water is replaced with cold one. Thereby not only one but two water circuits appear in the system: one vertical which makes water flow from container 15 at the floor 7 to container 15 at the wall 4 and slab 8 and a horizontal which flows warm water from the connected water circuits to the heat exchanger 55 from which the returned cold water cools the upper side of the containers 15 at the slab 8. Both circuits are closed so continuously the same water runs in the circuits. The system after this stores the heat, this can be a heat storage unit used with solar panels or also underground heat storage.

The heat exchanger 55 works as a heater during the winter and heat flows back to the containers 15. Warm water flows upwards therefore the heat exchanger 55 is not connected in the upper area of the containers 15 but in the lower one. Warm water flows in the containers 15 from which cold water leaves the system. The heat can be stored heat from earlier or another solution, like gas heating or eventually both at the same time. Connection between heat exchanger 55 and containers 15 can be switched from summer to winter mode by valves 57.

The solution cannot meet all the energy demand of the building in itself so the conventional energy system of the building is also necessary. This conventional energy system can consist of any conventional appliances. The conventional energy system shown in Figure 17 has for example a furnace 59 a solar panel 60 a heat storage appliance 61 a geothermal heat pump 61 a cooling appliance 63 and heaters 64 or floor heating, and hot water supply unit 65.The conventional system and fluid circuits of containers have to be harmonized for ideal operation and control.

The conventional energy system 58 and the water circuit of containers 15 cannot be connected directly because -as it was mentioned before- it is essential to keep the water always in closed circuit so only heat will be transferred from one circuit to the other.

There is another reason for separated operation of the two systems. The conventional system always consists of an energy source and an active surface (heat transmitter) like a radiator. The active surface compared to the room is relatively small. Because of that the heater has to have higher temperature then the desired temperature of the room, like for example a typical radiator operates with 60-90 degrees Celsius hot water. In case of the containers 15 this surface is significantly higher since all container surfaces are also cooler/heater surfaces. Because of that water with much lower temperature is sufficient for heating. This results significant energy savings and also allows that geothermal energy itself to be enough without uniting it with gas heating.

Accordingly the water circuit of the containers 15 and the conventional energy system defines independent circuits and the connection between them is made by the heat exchanger 55.

There could be several variations for heat exchanger.

In case of the simplest and classical solution the heat exchanger 55 is an appliance with two water circuits as shown in Figure 16. The water circuit of the heat exchanger 55 is connected to the water circuit of the containers 15 while its other circuit is connected to the conventional energy system 58 of the building.

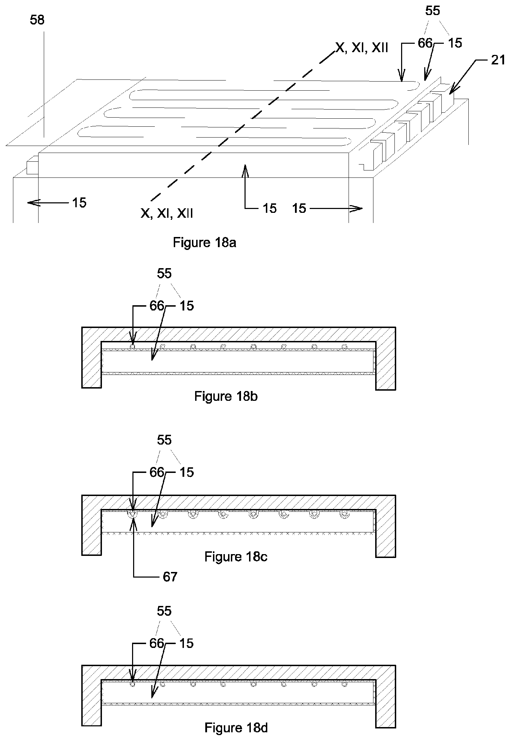

The heat exchanger 55 can be made in a way also that between horizontal containers 15 and their finish surface below or above them there is a counter flow serpentine piping 66 placed as it can be seen in Figures 18a and 18b (for simpler presentation only the upper container 15 and counter flow serpentine piping 66 is shown, in case of the lower container 15 the design is naturally the opposite). The counter flow serpentine piping 66 is connected directly to the conventional energy system 58. The container's 15 horizontal side 16 and the counter flow piping 66 create a large active contact surface where the heat exchange takes place. This contact surface makes connection between the two circuits so one circle of the heat exchanger 55 is the container itself and the other is the counter flow serpentine piping 66.

The efficiency of the heat exchanger 55 can be increased further by the solution shown in Figure 18c. One side 16 of the container 15 is made with channels 67 in which the counter flow serpentine piping 66 can be placed. This maximizes the contact surface area between serpentine piping 66 and the side 16.

The highest efficiency can be reached if the counter flow serpentine piping 66 is built in the container 15 as it can be seen in Figure 18d.

(The dimensions for valves in Figures 18c and 18d are the same as on 18a and 18b. Therefore both layouts can be understood without repeating the drawing in Figure 18a for all Figures.)

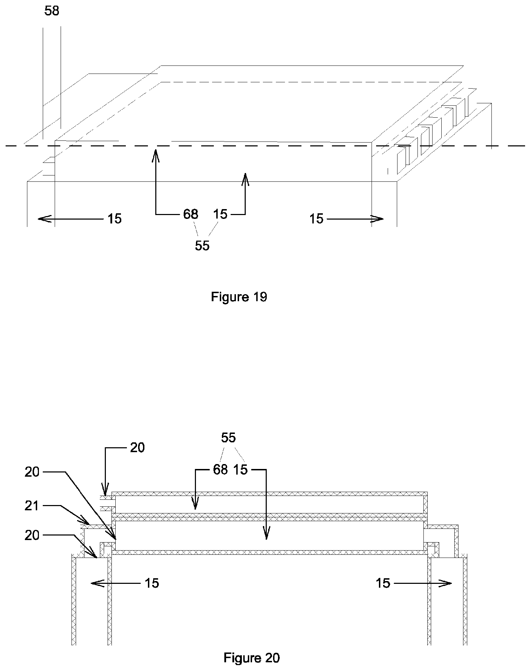

Also the large active surface of container's 15 side 16 can be used for to make a heat exchanger 55 as shown in Figure 19. This case there is another container 68 attached to the external side 16 of the container 15 in a way that the containers' 16 and 68 side 16 are in contact for the whole surface. This second container 68 can be also thinner then the first one 15 and is connected to the conventional energy system of the building 58. Because the two containers 15 and 68 are only separated by a thin wall and they are in contact on a large surface, thermal interaction takes place between them. Conversely, the heat exchange occurs on a large surface rapidly. Therefore the two circuits of the heat exchanger is made by two containers 15 and 68.

The second container's 68 design is similar to the simplest version of the containers for water circuit 15 but naturally is made with two joint elements 20 only. Through these the container 68 can be connected to the conventional energy system 58. The joint elements 20 can be built in a conventional way according the actual demands.

The second container 68 can also be made inside of the first container 15 itself in a way that it is divided by an internal dividing plate 69 which is parallel to the sides 16 and one part gives the water circuit of the containers 15 and the other the heat exchangers 55. The dividing plate 69 built between containers 15 and 68 is only one sheet and ideally is made by heat conducting material so the heat transfer can take place rapidly. On both ends of the container 15 the joint elements 20 are made as introduced earlier, but also this case for the container 68 there are only two joint elements 20 positioned to connect to the conventional energy system 58. The double container 15/68 can also be made as self-supporting or load-bearing this depends on naturally where it will be placed.

In the second container 68 with separating walls a counter flow serpentine layout can also be made.

As it can be seen in Figures l0a-10c, if there are many rooms in the building their relation to each other and to the buildings perimeter can be different in many ways. If they are equipped with independent water circuit, then it can happen that connecting these different water circuits becomes reasonable, so the heat gains of the rooms can be balanced between each other.

Such layout of rooms can be seen for example in Figure 10b, where two rooms on the ground floor have independent water circuit, the two circuits are next to each other and in both circuits there is a container 15 placed on the façade but with opposite orientation (this can be for example east and west facades). This case if between the two water circuits have heat exchange connection, then both water circuits have heat gain to be transferred to the other in the morning or afternoon, when Sun shines from east or west.

The same goes for rooms with south and north orientation, when the heat exchange connection uses the south gain and can heat the north side as well. Similar case, when if we try to supply an internal rooms heat demand at least partially by the heat surplus of a water circuit with a container 15 on the facade.

The process can also work for water circuits above each other, like when the heat surplus of south facing water circuits' above each other is transmitted upwards where on higher floor in a machinery area a heat exchanger can take it. This way there is no need for heat exchanger on every floor.

Finally it can be also necessary - like on second floor of the building shown in Figure 10b - when in one room - this case in the middle rooms water circuit - there is an intensive heat producer appliance 56 which heat can be used to heat the neighboring room and thereby the room with intensive heat producing appliance 35 can also be cooled.

The heat exchanging connection between neighboring rooms (next to or above each other) can be made with second containers as introduced earlier.

A practical solution for this can be seen in Figure 41. On each side of the shared wall 34 (or slab) of the neighboring rooms there are second containers 68 placed between the containers 15 and the wall 34. On both side of the separating wall 34 the second containers have joint elbow fittings 21 placed in joint elements 20 and these are connected to each other by tubes 70 which penetrate the wall 34 through holes. Because this case the second containers 68 are connected to each other, they have to be made with more joint elements 20 just like in case of the containers 15.

As it can be seen, the two containers 68 and the connecting tubes 70 make a water circuit just like the containers 15. Heat surplus in one room is transmitted from container 15 placed at the separating wall 34 to the secondary container 68 next to it. The warmed up water runs through the tubes 70 in the wall 34 to the other container 68 which also transmits the heat to the container 15 next to it. The water circuit made by containers 68 carries the heat surplus to the room with heat demand.

This introduced layout naturally can be made with counter flow/serpentine piping 66 or with containers 15 divided into two as shown in Figure 20.

If in the building the separating walls 34 are only made by panels and there is need for heat exchange between two rooms, then it is practical to use the container 15 divided into two parts as shown in Figure 20. This case the heat exchange connection can be made without a heat exchanger in one simple element.

As the connection between the containers' fluid circuit and the other energy system - conventional energy system 58, heat storage unit 56 or another water circuit - is optional and not static, these joints have to be controlled. Because of that there are pumps and valves built in between the connection of the fluid circuit and the heat energy system, which are controlled by an applicable monitoring system, in harmony with the conventional energy system of the building as well. This kind of monitoring system is not part of the invention, and it is conventional technology known well by professionals, therefore its detailed introduction is not necessary.

Accordingly the complete energy system consists of several types of elements: for one part the containers' water circuits are built 101 which work as a heat gaining and also heat losing (radiating) surfaces and also as heat balancing units.

The water circuits radiate heat surplus directly back to environment (like with night flush cooling for example) or forward it to the heat exchanger 102 units which takes it with another water circuit. The heat exchanger let this energy to be stored in a way, like by a heat storage unit or underground container 103.

Ideally the system can store as much heat during the year then necessary for heating period. In case when this is not possible, then some other heat source is also required: ideally geothermal or CHP (Combined Heat and Power) is used 104 which can provide heating water with lower temperature effectively, but also it can be gas or electric technology 105. The stored or produced heat energy warms the containers' water circled through the heat exchanger.

In addition to that the system can be extended with conventional solar panels 106 to increase the stored heat, and also in case there is not enough container surface in all the rooms, then radiator or underfloor heating 107 is also needed.

If the containers' surface is not enough or when the climate conditions require then also conventional cooling solutions may be necessary 108.

Photovoltaic panels or wind turbines and naturally any other technology can be used to cover the energy demand, but also the energy produced by CHP 109 can be utilized.

The system is operated by a central control unit 110, which monitors the temperature of air and surfaces and controls the heat energy system accordingly. This central control unit is not part of the invention and it is well known by professionals, therefore is not necessary to introduce it here in detail.

The combined systems control works in the following way.

The control unit of the circulation network is a thermostat which works the same way as control units utilized for floor heating or hot water supply technology. The thermostat monitors the temperature of the containers, and when the actual value is out of the predefined margin (generally set by the user), the heating/cooling system turns on. The control is primarily based on temperature, the heat relations of fluid volume is assured by the heat balance property of the fluid itself.

The heat energy system has 0+3 performance levels.

In "phase 0" the heating/cooling is not in operation, solar and other heat gains can balance the losses. This state is much longer compared to conventional buildings, because heat gains do not appear locally (in conventional buildings the north side is always cold for instance).

In case of heating, it is always the heat stored in thermal mass that covers the demands first (heat flows to areas where it is required). When this is not enough, heating starts to warm up perimeter walls, because these walls cool down first anyway (phase 1). Heat reaches the wall directly through the heat exchange unit attached to the container. Naturally, from there it spreads to the other elements, however, it is the perimeter wall area that remains the main heating source.

If this gets insufficient, in addition to the perimeter wall the floor areas join the heating process (phase 2), assured by the same heat exchange unit.

In phase 3, besides the floor and the perimeter wall, the interior walls also join in the heating process. This is rarely necessary, though, only in case of peak demands.

In case of cooling, phase 0 relies on the whole thermal mass of the fluid circuit (obviously it works the opposite way, heat is taken by the cooler areas of the fluid volume).

In phase 1 the perimeter wall is turned on. The cooling takes place by the heat exchange unit, which takes heat from the structure along the upper line of the wall and from the ceiling in the same area. This hot water is placed in a heat storage unit, which can be hot water supplies (like baths/showers) or other heat storage applications (like underground heat storage). The heat exchange units connect two circuits: one is the fluid circuit of containers, the other is between the heat storage and the heat exchange unit.

In phase 2 the ceiling works together with the perimeter wall.

In phase 3 in addition to the ceiling and the perimeter wall, the interior wall joins the cooling process. Phase 3 is only needed in case of peak loads, when climatic conditions or function requires it. In Hungary for example, generally phases 0+1+2 for heating and phase 0+1 for cooling are sufficient, but naturally the system is applicable for other climates also.

The multi-phase operation naturally requires the control and the division of the system into sectors.

The system allows the heating and cooling of the rooftop as well, similar to the other spaces introduced above. The difference is that "night flush cooling" or radiant cooling (when stored heat is radiated back to the environment during the night) can have more importance.

In conclusion, generally 2 systems can be made depending on what we intend to do with the stored heat, and what the climatic conditions are (the two are naturally related). The two solutions can also be mixed, and in case of extreme climatic conditions this actually might be even necessary.

In the first solution the structure only stores the heat until the night, in this case the amount of fluid inbuilt is sufficient to store the heat gain of one day, which is given/ventilated/radiated back to the environment during the night. In case of the second solution the heat is utilized in any way (like for hot water supply or stored for later use for heating).

In addition to architectural-aesthetic limitations for the maximum size of space and air volume incorporated in the fluid circuit of containers, there can also be limits of structural and mechanical engineering to define where and when to set the limits of an actual panel circuit dimensions.

With respect to the structure, the limit can be the weight of the fluid and its hydrostatic pressure. Above 3-4 m considerable weight can appear, which can naturally be solved but is unlikely to be economic.

This also goes for mechanical engineering, because of floor heating theoretically the space can be built with any indoor height without compromising thermal comfort, but because of cooling low ceiling height is preferable, the mentioned 3-4 m is ideal. In this case larger sizes can also be applicable, but not necessary economic.

The main essence of the invention is that wall elements (panels) can be made where - unlike in case of conventional and known panel systems- the main weight of the structure is given by some kind of fluid, while the solid constituents in conventional terms play the role of a container only, and mainly any other task (insulation, heat storage, noise resistance, etc.) is given by union of fluid and air/gas.

The importance of such a building method lies not only at its cost-efficiency, but it also gives the possibility of a completely new model in building physics, which solves heating-cooling-ventilation tasks much more effectively. It also decreases the amount of demolition waste considerably. The utilized materials are ideally re-useable/recyclable to a great extent, or can enter the natural material circulation without pollution.

The heat energy system of a building according to the invention consists of many elements, among them there is a container for perimeter and internal use, also others applicable for the ceiling, and the roof or the floor, therefore in ideal case using the system a complete building can be constructed. The system can be used for various scales of construction from a detached house or secondary buildings to apartment housings, from high-rise buildings and industrial buildings to halls. Naturally the system can be combined, so it can be united with other technologies when only a part of the building is built by the system, therefore it is applicable for building renovation as well.

Interior use only is also possible if the goal is to emphasize the new kind of aesthetics of the system, or to benefit from its energetic and mechanical engineering advantages.

Finally, mechanical engineering system renovation is also possible if the system is built in an existing new building because of its advantages in mechanical engineering.

The system can be created in solid and also in transparent/translucent versions, therefore it shows similarity with known glass curtain wall and panel technology at the same time:
Compared to transparent glass curtain walls the most important difference is the material use, namely the presence of a relatively large amount of fluid. Because of that the system works in a completely different way from glass wall technologies, it not only utilizes the thermal mass of the fluid but also its fire-resistance capacity increases considerably. With its thermal mass overheating during the summer and sudden cooling in winter can be avoided, and the panel is applicable for wall heating/cooling, which is not possible in case of glass curtain walls.

Compared to solid panels the material use is also crucial, the main weight, heating/cooling and also air-conditioning can be given by the fluid, which is also mainly responsible for the heat resistance capacity. This is not conventional for the known systems today, because the solid materials have importance even if heating appears in the panels, because solid materials refer for acoustics, thermal insulation or fire protection demands.

It is important to emphasize that the system works in completely different way in terms of building physics from the examples known or mentioned above. This is because the fluid masses are not separated in the system but connected continuously: from the perimeter the container fluid can flow towards the floor or the ceiling. This is important because this way heat can flow from warmed up parts to the colder areas. This is one of the most important novelties of the structure, which is not known in other buildings, and has a serious effect on energy savings and indoor thermal comfort.

All the elements the heat energy system of a building according to the invention can be prefabricated, during construction it is only the assembly that takes place on the building site. Fluid enters in the last step, in the factory there is only an infill check to make sure of the water proof capacity. Containers can be made in different size, the sizes depend on the actual architectural plan as well, but if possible, ideally it is necessary to design in module sizes, otherwise fabrication with special sizes will be required.

Containers for the perimeter wall and the roof can be attached with insulation already in the factory, parallel sheets with closed air layers between (they can be air layers or vacuum cells, or occasionally gas cells, separated with transparent/translucent plastic or glass sheets to allow solar gain to reach the fluid volume), and with an external finish (ideally made of a glass or plastic layer).

During fabrication the containers can also be made with final interior finish (ideally not a heat insulating material like wallpaper, ceramic or stone tiles). The smaller elements have a role in heating and cooling while the bigger ones take part in conditioning due to their heat storing capacity. The interior containers have this thermal volume only.

Containers belonging to the floor have to be made with an inbuilt structural support and a final floor finish.

After fabrication, transportation and site assembly takes place. If possible, the containers are joined with connections everywhere which later allows disassembly, this can be made with bolted and screw joints. The joint elements in the fluid flow are built in a similar way to conventional pipe joining.

The invention is applicable for building glass curtain walls, in this case even its appearance is a novelty. Its advantages in energetics and fire resistance can be important.

In case of existing buildings the system can also appear as a transparent and solid wall, it can be independent or an attached layer joined to the existing structure. In both cases it can greatly improve the thermal insulation of the building and can decrease the energy consumption.

The waste production of the system is minimal, because both fluid and solid constituents are re-useable, therefore it is ideal for temporary buildings or pavilions.

One of the most important advantages of the system is that by connecting the fluid volumes the thermal storage capacities will be united, because the system with fluid flow balances temperature differences in the whole mass. This way summer overheating and winter cooling can be avoided, which is typical for transparent structures.

The system needs a lower temperature for heating/cooling unlike in case of conventional systems, so combined with renewable energy sources (like geothermal or solar heat) considerable energy savings can be achieved, even compared to current systems.

In case it is made from a transparent material (like glass or plastic), the insulation ideally made of air/gas cells results in an economic transparent structure, which together with the fluid volume increases fire-resistance capacity compared to conventional glass structures.

The material use of the system is cost-effective, and in case the solid panels are also made from re-usable/recyclable materials (like plastic/aluminum/glass/copper for shell), the system becomes completely re-usable/recyclable. This causes energy savings, because the air layers and the fluid volume gives the main weight, which can be recycled/reused with a modest energy investment.

The heat energy system of a building according to the invention has a special application possibility: it can work as a fire-boarder structure as well. The separation between spaces made by the container is an internal wall structure built with double fluid circuits. The material of the container is not necessarily fire resistant, but with fluid infill its fire resistance increases significantly. The fire resistance can be helped with the fluid flow: the heat load caused by the fire starts the flow, which transports the heat to the colder areas, while the warmed up fluid will be replaced by a colder one. This way the fluid flow increases fire resistance. This increase can only be assured together with the fluid circuit, that is why the system is built ideally with two circuits (one fluid circuit for each side), this way the fire load can reach the structure from any side, it can flow to the other one.

List of reference signs: g

| | | | |
|---|---|---|---|
| \1 | building | 3 | perimeter wall |
| 2 | room | 4 | wall |
| 5 | wall | 36 | load-bearing structure |
| 6 | wall | 37 | opening |
| 7 | floor | 38 | structural infill |
| 8 | slab | 39 | pipe |
| 9 | surrounding surface | 40 | pipe |
| 10 | surrounding surface | 41 | thermal insulation |
| 11 | surrounding surface | 42 | ventilation hole |
| 12 | surrounding surface | 43 | airflow producing appliance |
| 13 | surrounding surface | 44 | cavity |
| 14 | surrounding surface | 45 | column grid |
| 15 | container | 46 | ventilation pipe |
| 16 | side | 47 | conduct |
| 17 | edge | 48 | heat insulation sheet |
| 18 | finish cover | 49 | cavity |
| 19 | overlay walkable finish | 50 | column |
| 20 | joint element | 51 | beam |
| 21 | joint elbow fitting | 52 | building |
| 21A | joint elbow fitting (lower) | 53 | roof |
| 21F | joint elbow fitting (upper) | 54 | skylight |
| 22 | joint valve | 55 | heat exchanger |
| 23 | check valve | 56 | heat storage unit |
| 24 | air lock | 57 | valve |
| 25 | structural frame | 58 | conventional energy system |
| 26 | spacers | 59 | furnace |
| 27 | perforations | 60 | solar panel |
| 28 | load-bearing frame | 61 | heat storage unit |
| 29 | bracing frame | 62 | geothermal heat pump |
| 30 | spacers | 63 | cooling appliance |
| 31 | spacers | 64 | radiator |
| 32 | load-bearing frame | 65 | hot water supply unit |
| 33 | roof | 66 | counter flow/serpentine piping |
| 34 | separating wall | 67 | channel |
| 35 | intensive heat producing appliance | 68 | container |
| 69 | dividing plate | 105 | additional heat sources |
| 70 | pipe | 106 | solar panels |
| 101 | water circuits | 107 | conventional radiators |
| 102 | heat exchanger | 108 | conventional cooling |
| 103 | heat storage | 109 | electric power supply |
| 104 | sustainable energy saving heat sources | 110 | central control unit |
| [306] | 62 | geothermal heat pump | |
| [307] | 63 | cooling appliance | |
| [308] | 64 | radiator | |
| [309] | 65 | hot water supply unit | |
| [310] | 66 | counter flow/serpentine piping | |
| [311] | 67 | channel | |
| [312] | 68 | container | |
| [313] | 69 | dividing plate | |
| [314] | 70 | pipe | |
| [315] | 101 | water circuits | |
| [316] | 102 | heat exchanger | |
| [317] | 103 | heat storage | |
| [318] | 104 | sustainable energy saving heat sources | |
| [319] | 105 | additional heat sources | |
| [320] | 106 | solar panels | |
| [321] | 107 | conventional radiators | |
| [322] | 108 | conventional cooling | |
| [323] | 109 | electric power supply | |
| [324] | 110 | central control unit | |

## Claims

1. A building comprising a heat energy system for heating or maintaining thermal balance of an interior of at least a part of the building, wherein the heat energy system comprising containers built near to surrounding surfaces of the building, wherein
said containers define a fluid volume which is filled with heat transporting fluid,
said containers (15) are closed containers (15) built near to at least two opposite lateral surrounding surfaces (9-12) and at least a part of upper and lower horizontal surrounding surfaces (13, 14), of said building;
the neighboring containers (15) are interconnected via joint elements (20) in such a manner that all containers (15) define one closed fluid volume filled with said heat transporting fluid,
**characterized in that**
each container (15) is divided into two parts by a separating plate (69) which is parallel to the side (16) of the container (15) , one of the parts is connected to the closed fluid volume and the other part constitutes a heat exchanger (55),
the heat exchanger (55) is connected to a conventional energy system (58) of the building and/or to a heat storage unit (56).

2. The building according to claim 1 **characterized in that** in the heat energy system one of the containers (15) built at the building's façade has a thermal insulation (41) in front of it and between said container (15) and the thermal insulation (41) there is a thin air cavity (44) which is connected to the external atmosphere through ventilation holes (42) made at the bottom and at the top of said container (15).

3. The building according to claim 2 **characterized in that** said ventilation holes (42) are connected to an airflow producing appliance (43).

4. The building according to claim 1 **characterized in that** in the heat energy system one of the containers (15) arranged vertically at the building façade comprises vertical ventilation pipes (46) which are connected to the two sides of said container (15) through a conduct (47) at both near to its lower and upper end.

5. The building according to claim 4 **characterized in that** in the containers (15) the vertical pipes (46) are connected by an airflow producing appliance (43).

## Patentansprüche

1. Gebäude, das ein Wärmeenergiesystem zum Heizen oder Aufrechterhalten des thermischen Gleichgewichts eines Innenraums von mindestens einem Teil des Gebäudes umfasst, wobei das Wärmeenergiesystem Behälter umfasst, die in der Nähe von umgebenden Oberflächen des Gebäudes gebaut sind, wobei
die Behälter ein Fluidvolumen definieren, das mit wärmetransportierendem Fluid gefüllt ist,
die Behälter (15) geschlossene Behälter (15) sind, die in der Nähe von mindestens zwei gegenüberliegenden seitlichen umgebenden Oberflächen (9-12) und mindestens einem Teil der oberen und unteren horizontalen umgebenden Oberflächen (13, 14) des Gebäudes gebaut sind;
dass die benachbarten Behälter (15) über Verbindungselemente (20) derart miteinander verbunden sind, dass alle Behälter (15) ein geschlossenes, mit dem Wärmetransportfluid gefülltes Fluidvolumen definieren,
***dadurch gekennzeichnet,* dass**
jeder Behälter (15) durch eine zur Seite (16) des Behälters (15) parallele Trennplatte (69) in zwei Teile geteilt ist, wobei einer der Teile mit dem geschlossenen Flüssigkeitsvolumen und der andere Teil einen Wärmetauscher (55) verbunden ist,
dass der Wärmetauscher (55) an ein konventionelles Energiesystem (58) des Gebäudes und/oder an einen Wärmespeicher (56) angeschlossen ist.

2. Gebäude nach Anspruch 1, ***dadurch gekennzeichnet,* dass** im Wärmeenergiesystem einer der an der Gebäudefassade angebrachten Container (15) eine Wärmedämmung (41) vor dem Container (15) aufweist, und zwischen dem Container (15) und der Wärmedämmung (41) ein dünner Lufthohlraum (44) vorhanden ist, der durch Belüftungslöcher (42) am Boden und an der Oberseite des Behälters (15) mit der Außenatmosphäre verbunden ist.

3. Gebäude nach Anspruch 2, ***dadurch gekennzeichnet,* dass** die Belüftungslöcher (42) mit einem einen Luftstrom erzeugenden Gerät (43) verbunden sind.

4. Gebäude nach Anspruch 1, ***dadurch gekennzeichnet,* dass** im Wärmeenergiesystem einer der vertikal an der Gebäudefassade angeordneten Container (15) vertikale Lüftungsrohre (46) aufweist, die mit den beiden Seiten des Containers (15) durch eine Leitung verbunden sind (47) sowohl in der Nähe seines unteren als auch des oberen Endes.

5. Gebäude nach Anspruch 4, ***dadurch gekennzeichnet,* dass** in den Behältern (15) die vertikalen Rohre (46) durch eine Luftstromerzeugungsvorrichtung (43) verbunden sind.

## Revendications

1. Bâtiment comprenant un système d'énergie thermique pour chauffer ou maintenir l'équilibre thermique d'un intérieur d'au moins une partie du bâtiment, dans lequel le système d'énergie thermique comprend des conteneurs construits à proximité des surfaces environnantes du bâtiment, dans lequel
lesdits conteneurs définissent un volume de fluide qui est rempli de fluide caloporteur,
lesdits conteneurs (15) sont des conteneurs fermés (15) construits à proximité d'au moins deux surfaces environnantes latérales opposées (9-12) et d'au moins une partie des surfaces environnantes horizontales supérieure et inférieure (13, 14) dudit bâtiment;
les conteneurs (15) voisins sont interconnectés via des éléments de jonction (20) de telle manière que tous les conteneurs (15) définissent un volume de fluide fermé rempli dudit fluide caloporteur,
***caractérisé en ce que***
chaque conteneur (15) est divisé en deux parties par une plaque séparatrice (69) qui est parallèle au côté (16) du conteneur (15), l'une des parties est reliée au volume de fluide fermé et l'autre partie constitue un échangeur de chaleur (55),
l'échangeur de chaleur (55) est relié à un système énergétique conventionnel (58) du bâtiment et/ou à une unité de stockage de chaleur (56).

2. Bâtiment selon la revendication 1, ***caractérisé en ce que*** dans le système d'énergie thermique l'un des conteneurs (15) construit à la façade du bâtiment a une isolation thermique (41) devant lui et entre ledit conteneur (15) et l'isolation thermique (41 ) il y a une mince cavité d'air (44) qui est reliée à l'atmosphère extérieure par des trous d'aération (42) pratiqués au fond et au sommet dudit conteneur (15).

3. Bâtiment selon la revendication 2, ***caractérisé en ce que*** lesdits trous de ventilation (42) sont reliés à un appareil de production de flux d'air (43).

4. Bâtiment selon la revendication 1, ***caractérisé en ce que*** dans le système d'énergie thermique, l'un des conteneurs (15) disposés verticalement sur la façade du bâtiment comprend des tuyaux de ventilation verticaux (46) qui sont reliés aux deux côtés dudit conteneur (15) par un conduit (47) à la fois près de son extrémité inférieure et supérieure.

5. Bâtiment selon la revendication 4 ***caractérisé en ce que*** dans les conteneurs (15) les tuyaux verticaux (46) sont reliés par un appareil générateur de flux d'air (43).
